# EUROPEAN PATENT SPECIFICATION

(11) **EP 1 197 140 B1**
(45) Date of publication and mention of the grant of the patent: **29.09.2004**
(21) Application number: 01203723.0
(22) Date of filing: 01.10.2001
(51) Int. Cl.: A01J 7/04

(54) **A device for and a method of cleaning teats**
Vorrichtung und Verfahren zum Reinigen der Zitzen
Dispositif et méthode de nettoyage des pis

(30) Priority: 10.10.2000 NL 1016380
(43) Date of publication of application: 17.04.2002
(73) Proprietor: Lely Enterprises AG, 6300 ZUG (CH)
(72) Inventor: van der Lely, Alexander, 3065 NA Rotterdam (NL); Seerden, Adrianus Maria, 2231 BW Rijnsburg (NL); Fransen, Renatus Ignatius Josephus, 3135 ZD Vlaardingen (NL)
(74) Representative: Corten, Maurice Jean F.M.

(56) References cited:
- EP-A- 0 737 031
- WO-A-99/05904

## Description

The invention relates to a device for cleaning the teats of the udder of a dairy animal, said device being provided with a cleaning member that is drivable by a drive member.

The invention further relates to a method of cleaning the teats of the udder of a dairy animal, the cleaning being carried out by a cleaning member driven by a drive member.

Such a device for and such a method of cleaning teats, in which rollers or brushes are used as cleaning elements, have been applied for a long time already. Upon correct operation thereof the cleaning elements are set in rotation for cleaning the teats. However, in practice it happens that in certain cases not all the teats appear to have been cleaned after application of the device or the method. Although by visual inspection or by using high-grade equipment it is possible to check whether cleaning has taken place correctly, this requires extra time and/or additional costs.

It is an object of the invention to provide a device for and a method of cleaning the teats of an udder of a dairy animal, in which it is possible to check in a simple and cheap manner whether a teat has been cleaned.

For that purpose, in a first aspect of the invention, a device of the above-described type is characterized in that the device is provided with a power measuring system for measuring the power of the drive member during the drive of the cleaning member, and with a comparator for comparing the momentary value of the power measured by the power measuring system with a lower threshold, said comparator supplying a signal when the lower threshold is exceeded. By means of such a comparison it is not only possible to establish that a teat has been touched by the cleaning member during cleaning, but also that a teat has actually been cleaned. The fact is that when a teat is being cleaned, the power of the drive member increases in comparison with the situation in which the cleaning member is free from the teat and also in comparison with the situation in which the cleaning member exclusively touches the teat. When the lower threshold is not reached, it is possible that the relevant teat has indeed been touched but has not been cleaned, and there is not supplied a signal that the lower threshold has been exceeded. Thus the lower threshold provides a simple means for checking whether all the teats have been cleaned.

In an embodiment of a device according to the invention, the device is provided with a control member for controlling the drive member, said control member controlling the drive member with the aid of data from the power measuring system. Such a control member can ensure an automatic functioning of the cleaning member. For example, when after some time the power has not exceeded the lower threshold, the control member can bring the device, in particular the cleaning member, into a new position in which a renewed attempt is made to clean the teat.

The comparator is preferably suitable for comparing the momentary value of the power measured by the power measuring system with an upper threshold. In the situation of a too flabby udder it may happen that, during cleaning, the cleaning member not only cleans the teat but also the udder. Moreover, in some cases the cleaning elements may grip the teat at a too high level, which is undesirable. When the situation of gripping a teat at a too high level or cleaning the udder occurs, the power of the drive member appears to increase to above the normal value for cleaning. When the power exceeds the upper threshold, suitable measures can be taken automatically. For example, the cleaning member can be moved away from the teat or the udder.

An extremely efficient cleaning is obtained when the cleaning member is provided with at least two cleaning elements that are rotatable about an axis. The cleaning elements are preferably rotatable in two directions.

The drive member is preferably constituted by a pneumatic or hydraulic drive member. Besides providing an increased safety during cleaning, this offers unexpected advantages in the drive of the cleaning elements, thus enabling to achieve the above-mentioned object. Besides, it is also possible, of course, to apply an electrically driven cleaning member, although this is less desirable for reasons of safety of the animal.

When the upper threshold is reached, the control member preferably changes the direction of rotation of the cleaning elements into the opposite direction. After some time, as a result of the opposite rotation, the teat has been removed from between the cleaning elements, and a renewed attempt to clean the teat can be made. This takes place preferably automatically in that the control member is provided with a time switch for changing the direction of rotation into the opposite direction after an adjustable period of time has elapsed.

The cleaning member is preferably disposed on a robot arm, so that all positions can be reached by steering the robot arm.

When the robot arm is provided with teat cups, the cleaning device according to the invention can simply be integrated into an automatic milking implement.

According to a second aspect of the invention there is provided a method of cleaning the teats of the udder of a dairy animal, in which the cleaning is carried out by a cleaning member driven by a drive member, characterized in that the method further comprises the steps of measuring the power of the drive member, of comparing the measured power with a power threshold value, of choosing a lower threshold as a power threshold value, and of supplying a signal when the lower threshold is exceeded.

The signal is preferably used for giving an indication that cleaning has taken place.

Alternatively or additionally the signal or in general the drive member can be controlled by means of the measured power of the drive member.

The invention will be described hereinafter by way of example with reference to an embodiment shown in the drawing, in which:
Figure 1 is a schematic plan view of a device for cleaning teats according to the present invention, and
Figures 2A through 2F show schematically some steps of a method of cleaning the teats of an udder according to the present invention.

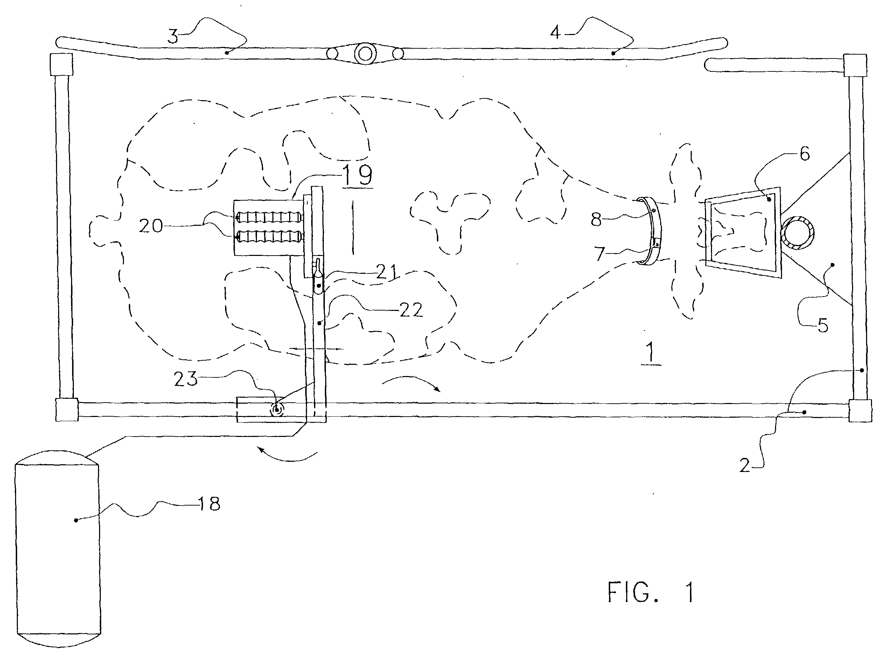

In the embodiment shown in Figure 1 the device for cleaning the teats of the udder of a dairy animal, such as a cow, comprises a cleaning parlour 1 which is confined by a fencing 2 and two doors 3 and 4. The cleaning parlour 1 can be combined with a milking implement so as to form a milking/cleaning parlour, although the invention is not limited thereto. Via the entrance door 3 an animal can enter the parlour 1, while the animal can leave the parlour 1 via the exit door 4. The parlour 1 further comprises an automatic feeding system 5 with a feeding trough 6. In the vicinity of the feeding trough 6 there is provided a sensor which is not shown in the figure and which is capable of co-operating with a transponder 7 that is fitted to the collar 8 of the animal. Said sensor is connected to a not further shown computer system and forms with the transponder 7 an animal identification system known per se. With the aid of said animal identification system animals entering the parlour 1 can be identified. When an animal has been identified in the parlour 1, a data file concerning the animal in question can be accessed in the computer. Said data file contains the data relevant to the feed supply and, if desired, further data relevant to cleaning and milking of the animal in question. These data may also contain the data about the position of the teats of the animal relative to a particular reference point. It frequently happens that partially on the basis of these data a cleaning member is placed under the animal's udder. Alternatively there may be provided means for placing and retaining the animal in a certain position in the milking/cleaning parlour 1, after which the cleaning member 19 performs standard motions. In the latter case data from the animal identification system are not necessary for cleaning.

The device may also be provided with a milking robot, not shown in Figure 1, said milking robot comprising teat cups that are mounted on a robot arm.

Usually the teats of the animal are cleaned prior to the milking proper of the animal. For that purpose there is provided a cleaning member 19, constituted in the embodiment shown by two motor-drivable cleaning elements 20, e.g. rollers or brushes. Of course, the cleaning member may also comprise an other number of rollers or brushes, or other cleaning elements.

The teats to be cleaned are drawn between the two cleaning elements 20 by means of the rotating motion of the cleaning elements 20 and are thus cleaned in an extremely efficient manner.

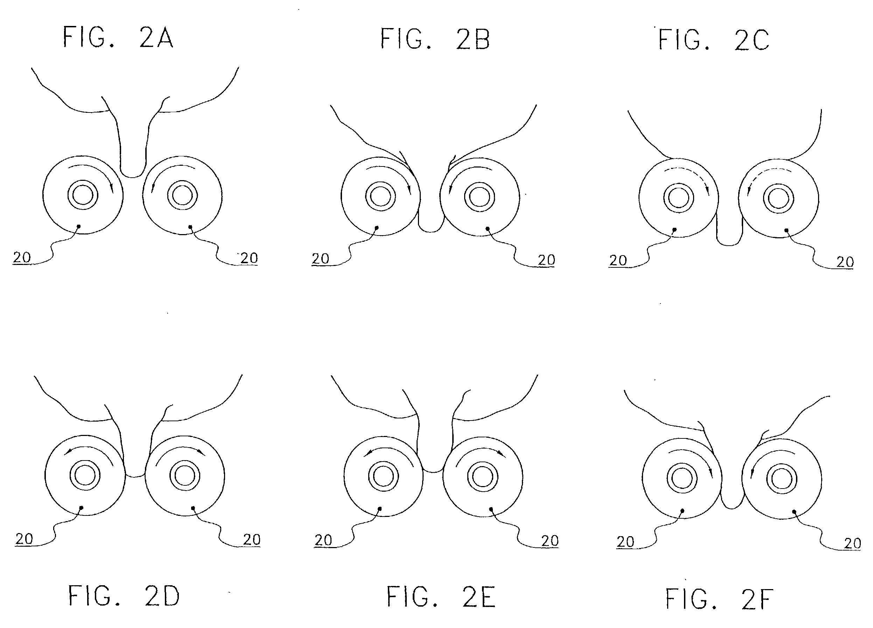

The cleaning elements 20 are shown in Figure 2 in the form of rollers. In the embodiment shown in Figure 1 the cleaning rollers 20, as well as the drive member 21 driving said rollers pneumatically or hydraulically, are disposed near the end of a robot arm 22. A mechanical or electric drive member can be applied as well, although for reasons of safety of the animal this is less desirable. Said robot arm 22 may be movable both in the longitudinal direction of the parlour 1 and in a direction transversely thereto as well as in height. The robot arm 22 may further also be pivotable about a vertical axis 23.

Figure 2 shows the cleaning rollers 20 having a circular cross-section. In the longitudinal direction, these rollers 20 extend e.g. accordion-like, as indicated in Figure 1, so that the teats drawn between the rollers 20 will come into contact therewith as much as possible. During cleaning the direction of rotation of the rollers 20 is such that they move along the teat from top to bottom. In this way the teat is drawn between the rollers 20 and dirt is discharged downwards. If desired, the rollers 20 may be moistened, e.g. from the inside by a supply of water through a tube which is concentric with the drive shaft of the rollers. During cleaning of the teats the rotating motion of the rollers 20 can furthermore be combined with a motion in vertical direction downwards and/or with a motion in horizontal direction.

The cleaning rollers 20 may be mounted so as to be movable relative to each other, so that the distance between the rollers 20 can be increased or decreased somewhat, as a result of which the pressure of the cleaning rollers 20 on the teat is adjustable.

The drive may also be an eccentric drive. By the eccentric drivability an alternating pressure can be exercised on the teat. By means of the eccentric motion a pulsatory action is exercised on a teat, while the pulsation frequency can be attuned to an optimal cleaning, with a massage function if desired. The invention will be described hereinafter by way of example with reference to an air-operated engine, although it will be obvious that the invention is not limited thereto.

The cleaning rollers 20 may be made from a deformable material. This deformability can be effected e.g. by pressing air into the inside of the cleaning rollers 20 and by making on the inner side a number of perforations through which the air can exert a force in radial outward direction on the material enveloping the cleaning rollers 20. Due to this deformability, the cleaning rollers 20 can be given an unround shape, so that upon driving of the cleaning rollers 20 there is again exercised a pulsatory action on the teat. The cleaning elements 20 may have an unround and in particular an ellipse-like shape.

Irrespective of the design of the cleaning elements 20, the distance between the cleaning elements 20 is preferably adjustable in all situations and the cleaning elements are preferably movable in height in all situations, so that, regardless the fact whether the elements are circular or have an unround shape or are shiftable in phase relative to each other, the pressure exercised by the elements on the teats can always be adjusted.

According to the invention there is provided a power measuring system offering the possibility of monitoring the momentary power, i.e. the torque in the case of a pneumatic or hydraulic drive, of the drive member and consequently of checking whether the device functions correctly. The power measured can be made visible e.g. on a remotely disposed picture screen to provide an indication of the functioning. For this power measuring system separate devices, known per se, may be used. However, it is advantageous to use drive members having an integrated power measuring system.

When the cleaning member is not controlled by a computer obtaining information from an animal identification system, it appears that in certain cases not all the teats are cleaned. The invention provides a simple possibility of checking whether a teat has actually been cleaned. This is achieved in that a comparator compares the momentary value of the power measured by the power measuring system with a lower threshold. By means of such a comparison it can be established that a teat has not only been touched by the cleaning elements, but has actually been cleaned. The fact is that when a teat is being cleaned the power of the drive member increases in comparison with the situation in which the cleaning elements are freely rotating and in comparison with the situation in which the teat is only touched. When the lower threshold is not reached, it can be assumed that a relevant teat has not been cleaned, and the means in question can be controlled in such a manner that a renewed attempt is made to clean said teat.

It may occur that during cleaning the cleaning elements 20 grip a teat at a too high level and/or draw between them besides the teat also the udder. Causes thereof may be e.g.: an incorrect distance between the cleaning elements 20, or an incorrectly adjusted pressure exercised by the cleaning elements 20 on the teat. This situation is shown in Figure 2C.

In order to prevent this situation that may involve an insufficient cleaning of the teats, according to the invention, at the moment when the cleaning elements 20 exercise a too great force on the teat, the direction of rotation of the cleaning elements 20 is preferably changed into the opposite direction. Alternatively, the cleaning elements 20 can be moved away from each other so that the teat is entirely released.

The moment when the cleaning elements 20 grip the teat at a too high level or also draw the udder between them can e.g. be determined by monitoring the rotational speed of the cleaning elements 20. When this rotational speed comes below a predetermined value during cleaning, measures for preventing insufficient cleaning can be taken, such as e.g. changing the direction of rotation into the opposite direction.

However, an extremely elegant way of determining this moment, which moreover enables a very quick reaction to the occurrence of the above-described undesirable situations, is the use of the power measuring system.

In an embodiment of a device according to the invention a control member ensures an automatic feedback to the drive member by means of the power measured. In particular the control member is provided with a comparator that compares the momentary value of the power measured by the power measuring system with an upper threshold. When e.g. the situation of gripping a teat at a too high level occurs, the power of the drive member will increase. When the power exceeds the upper threshold, suitable measures can thus be taken automatically by the control member. The two cleaning elements can e.g. be moved away from each other if the construction allows such a motion.

When the upper threshold is reached, the control member preferably changes the direction of rotation of the cleaning elements 20 into the opposite direction. After some time, as a result of the opposite rotation, the teat has been removed from between the cleaning elements, as shown in Figure 2E. When this situation has been reached, there may be supplied e.g. by the device a signal to the farmer to enable the latter to inspect the relevant cow and cleaning elements. However, after the upper threshold has been exceeded, there are preferably first made one or more attempts to restart cleaning. This can take place preferably automatically when the control member is provided with a time switch for changing the direction of rotation into the opposite direction after an adjustable period of time has elapsed. This implies that the direction of rotation returns to the direction of rotation used for cleaning the teat, as schematically shown in Figure 2F.

Such an air-operated engine as a pneumatic drive member having an incorporated torque measuring system (with adjustable upper threshold) and a time switch is provided e.g. by the pressure switch valve VD-3-PK-3, which is supplied by the company Festo and which switches the air-operated engine.

Of course, the air-operated engine can also be controlled by an electronic control member with an electronic torque measuring system.

Although, in the embodiment shown, the robot arm 22 is only provided with a cleaning member, the robot arm is preferably also provided with teat cups. In this manner the cleaning device according to the invention can be integrated in a simple and compact manner into an automatic milking implement.

The invention also relates to a method of cleaning the teats of the udder of a dairy animal, the cleaning being carried out by a cleaning member driven by a drive member. The method comprises the steps of measuring the power of the drive member, of comparing the measured power with a power threshold value, of choosing a lower threshold as a power threshold value, and of supplying a signal when the lower threshold is exceeded. The signal can give an indication that cleaning has taken place.

As explained above, insufficient cleaning of the teat can be prevented when an upper threshold is chosen as a power threshold value and the direction of rotation of the cleaning elements is changed into the opposite direction when the upper threshold is exceeded.

## Claims

1. A device for cleaning the teats of the udder of a dairy animal, said device being provided with a cleaning member (19) that is drivable by a drive member (21), **characterized in that** the device is provided with a power measuring system for measuring the power of the drive member (21) during the drive of the cleaning member (19), and with a comparator for comparing the momentary value of the power measured by the power measuring system with a lower threshold, said comparator supplying a signal when the lower threshold is exceeded.

2. A device as claimed in claim 1, **characterized in that** the device is provided with a control member for controlling the drive member (21), said control member controlling the drive member with the aid of data from the power measuring system.

3. A device as claimed in claim 1 or 2, **characterized in that** the comparator is suitable for comparing the momentary value of the power measured by the power measuring system with an upper threshold.

4. A device as claimed in any one of the preceding claims, **characterized in that** the cleaning member (19) is provided with at least two cleaning elements (20) that are rotatable about an axis.

5. A device as claimed in claim 4, **characterized in that** the cleaning elements are rotatable in two directions.

6. A device as claimed in any one of the preceding claims, **characterized in that** the drive member (21) is constituted by a pneumatic or hydraulic drive member (21).

7. A device as claimed in claims 3 and 5, **characterized in that**, when the upper threshold is reached, the control member changes the direction of rotation of the cleaning elements (20) into the opposite direction.

8. A device as claimed in any one of the preceding claims, **characterized in that** the cleaning member (19) is disposed on a robot arm (22).

9. A device as claimed in claim 8, **characterized in that** the robot arm (22) is provided with teat cups.

10. A method of cleaning the teats of the udder of a dairy animal, the cleaning being carried out by a cleaning member (19) driven by a drive member (21), **characterized in that** the method further comprises the steps of measuring the power of the drive member (21), of comparing the measured power with a power threshold value, of choosing a lower threshold as a power threshold value, and of supplying a signal when the lower threshold is exceeded.

11. A method as claimed in claim 10, **characterized in that** the signal is used for giving an indication that cleaning has taken place.

12. A method as claimed in claim 10 or 11, **characterized in that** the method further comprises the step of controlling the drive member (21) with the aid of the power measured.

## Patentansprüche

1. Vorrichtung zum Reinigen der Zitzen des Euters eines milchgebenden Tieres, wobei die Vorrichtung mit einem Reinigungsglied (19) versehen ist, das durch ein Antriebsglied (21) antreibbar ist,
**dadurch gekennzeichnet, daß** die Vorrichtung mit einem Leistungsmeßsystem zum Messen der Leistung des Antriebsgliedes (21) während des Antriebs des Reinigungsgliedes (19) versehen ist sowie mit einem Komparator zum Vergleichen des Momentanwertes der von dem Leistungsmeßsystem gemessenen Leistung mit einem unteren Grenzwert, wobei der Komparator ein Signal gibt, wenn der untere Grenzwert überschritten wird.

2. Vorrichtung nach Anspruch 1,
**dadurch gekennzeichnet, daß** die Vorrichtung mit einem Steuerglied zum Steuern des Antriebsgliedes (21) versehen ist, wobei das Steuerglied das Antriebsglied mit Hilfe von Daten des Leistungsmeßsystems steuert.

3. Vorrichtung nach Anspruch 1 oder 2,
**dadurch gekennzeichnet, daß** der Komparator geeignet ist, den Momentanwert der von dem Leistungsmeßsystem gemessenen Leistung mit einem oberen Grenzwert zu vergleichen.

4. Vorrichtung nach einem der vorhergehenden Ansprüche,
**dadurch gekennzeichnet, daß** das Reinigungsglied (19) mit mindestens zwei Reinigungselementen (20) versehen ist, die um eine Achse drehbar sind.

5. Vorrichtung nach Anspruch 4,
**dadurch gekennzeichnet, daß** die Reinigungselemente in zwei Richtungen drehbar sind.

6. Vorrichtung nach einem der vorhergehenden Ansprüche,
**dadurch gekennzeichnet, daß** das Antriebsglied (21) durch ein pneumatisches oder hydraulisches Antriebsglied (21) gebildet ist.

7. Vorrichtung nach den Ansprüchen 3 und 5,
**dadurch gekennzeichnet, daß** das Steuerglied bei Erreichen des oberen Grenzwertes die Drehrichtung der Reinigungselemente (20) in die entgegengesetzte Richtung ändert.

8. Vorrichtung nach einem der vorhergehenden Ansprüche,
**dadurch gekennzeichnet, daß** das Reinigungsglied (19) an einem Roboterarm (22) angeordnet ist.

9. Vorrichtung nach Anspruch 8,
**dadurch gekennzeichnet, daß** der Roboterarm (22) mit Zitzenbechern versehen ist.

10. Verfahren zum Reinigen der Zitzen des Euters eines milchgebenden Tieres, wobei die Reinigung von einem Reinigungsglied (19) durchgeführt wird, das von einem Antriebsglied (21) angetrieben ist,
**dadurch gekennzeichnet, daß** das Verfahren ferner die Verfahrensschritte des Messens der Leistung des Antriebsgliedes (21), des Vergleichens der gemessenen Leistung mit einem Leistungsgrenzwert, des Wählens eines unteren Grenzwertes als Leistungsgrenzwert und des Lieferns eines Signals umfaßt, wenn der untere Grenzwert überschritten wird.

11. Verfahren nach Anspruch 10,
**dadurch gekennzeichnet, daß** das Signal dazu verwendet wird, eine Anzeige zu erzeugen, daß die Reinigung stattgefunden hat.

12. Verfahren nach Anspruch 10 oder 11,
**dadurch gekennzeichnet, daß** das Verfahren ferner den Verfahrensschritt umfaßt, das Antriebsglied (21) mit Hilfe der gemessenen Leistung zu steuern.

## Revendications

1. Dispositif de nettoyage des trayons du pis d'un animal laitier, ledit dispositif étant pourvu d'un élément de nettoyage (19) qui peut être entraîné par un élément d'entraînement (21), **caractérisé en ce que** le dispositif est pourvu d'un système de mesure de puissance pour mesurer la puissance de l'élément d'entraînement (21) lors de l'entraînement de l'élément de nettoyage (19), et d'un comparateur pour comparer la valeur momentanée de la puissance mesurée par le système de mesure de puissance à un seuil inférieur, ledit comparateur fournissant un signal lorsque le seuil inférieur est dépassé.

2. Dispositif selon la revendication 1, **caractérisé en ce que** le dispositif est pourvu d'un élément de commande pour commander l'élément de commande (21), ledit élément de commande commandant l'élément d'entraînement à l'aide de données provenant du système de mesure de puissance.

3. Dispositif selon la revendication 1 ou 2, **caractérisé en ce que** le comparateur est adapté pour comparer la valeur momentanée de la puissance mesurée par le système de mesure de la puissance à un seuil supérieur.

4. Dispositif selon l'une quelconque des revendications précédentes, **caractérisé en ce que** l'élément de nettoyage (19) est pourvu d'au moins deux éléments de nettoyage (20) qui tournent autour d'un axe.

5. Dispositif selon la revendication 4, **caractérisé en ce que** les éléments de nettoyage tournent dans deux directions.

6. Dispositif selon l'une quelconque des revendications précédentes, **caractérisé en ce que** l'élément d'entraînement (21) est constitué d'un élément d'entraînement pneumatique ou hydraulique (21).

7. Dispositif selon les revendications 3 et 5, **caractérisé en ce que**, lorsque le seuil supérieur est atteint, l'élément de commande change la direction de rotation des éléments de nettoyage (20) en la direction opposée.

8. Dispositif selon l'une quelconque des revendications précédentes, **caractérisé en ce que** l'élément de nettoyage (19) est agencé sur un bras de robot (22).

9. Dispositif selon la revendication 9, **caractérisé en ce que** le bras de robot (22) est pourvu de gobelets-trayeurs.

10. Procédé de nettoyage des trayons du pis d'un animal laitier, le nettoyage étant effectué par un élément de nettoyage (19) entraîné par un élément d'entraînement (21), **caractérisé en ce que** le procédé comprend en outre les étapes consistant à mesurer la puissance de l'élément d'entraînement (21), comparer la puissance mesurée à une valeur seuil de puissance, choisir un seuil inférieur en tant que valeur seuil de puissance, et fournir un signal lorsque le seuil inférieur est dépassé.

11. Procédé selon la revendication 10, **caractérisé en ce que** le signal est utilisé pour indiquer que le nettoyage a été effectué.

12. Procédé selon la revendication 10 ou 11, **caractérisé en ce que** le procédé comprend en outre l'étape consistant à commander l'élément d'entraînement (21) à l'aide de la puissance mesurée.
